# EUROPEAN PATENT SPECIFICATION

(11) **EP 0 510 316 B1**
(45) Date of publication and mention of the grant of the patent: **17.07.1996**
(21) Application number: 92102439.4
(22) Date of filing: 13.02.1992
(51) Int. Cl.: E04H 6/24, B65G 1/02

(54) **Cantilevered multifloor storage system**
Freitragendes, mehrstöckiges Lagersystem
Système de stockage à porte-à-faux en plusieurs étages

(30) Priority: 20.04.1991 JP 116743/91
(43) Date of publication of application: 28.10.1992
(73) Proprietor: CARTANCE JAPAN CO., LTD., Kofu-shi, Yamanashi-ken (JP)
(72) Inventor: Tanaka, Kenjiro, Kofu-shi, Yamanashi-ken (JP); Tanaka, Kouji, Kofu-shi, Yamanashi-ken (JP)
(74) Representative: Pätzold, Herbert, Dr.-Ing.

(56) References cited:
- DE-A- 2 543 947
- US-A- 2 765 932

## Description

The present invention relates to cantilevered multifloor storage structure for lifting and storing loads into several floors which are arranged one above another, as mentioned in the preamble of claim 1.

Japanese Patent Application Kokai No. 56-46066 (Patent No. 1,450,943) discloses a cantilevered multifloor storage structure which includes outer, intermediate, and inner guiding rails each consisting of a vertical elevation section, a horizontal pull-in section, and a curved section between them; carrier frames each having outer and inner rollers running on the guiding rails; and carrier platforms each joining a pair of the carrier frames together so as to form a carrier on which a load, such as a vehicle, is loaded and stored in a given floor. A similar cantilevered multifloor storage structure is disclosed in the US-A-2 765 932.

However, the elevation sections of the guiding rails in the above storage structure are erected in a vertical direction so that the cantilevered platform projecting forwardly from the elevation sections tends to bring down the storage structure forwardly as it is elevated to high floor positions.

In order to prevent this forward falling of the storage structure, the following countermeasures have been employed.
(1) A pair of storage structure are erected on opposite sides of a street and the top portions of the guiding rails are joined together.
(2) The base structure of a storage structure is made large and embedded deeply in the ground.

However, the countermeasure (1) is often impossible to employ because of the space limitation. The countermeasure (2) requires more work and, therefore, is expensive.

Accordingly, it is an object of the invention of the above-mentioned case to provide a cantilevered multifloor storage structure which is stable as the platform is elevated to store a load into a given floor.

According with the present invention said object is obtained with the features of the characterizing portion of claim 1.

Preferred embodiments of the invention are mentioned in the subclaim.

With the cantilevered multifloor storage structure according to the invention it is possible to eliminate the need for a pair of storage structures erected back to back or on opposite sides of a street and connected to each other on the top edges, or a large base structure embedded deep in the ground, thereby making the working period shorter and the manufacturing costs lower than before.

The above and other objects, features, and advantages of the invention will be more apparent from the following description when taken in conjunction with the accompanying drawings.

### Brief Description of the Drawings

Fig. 1 is a side elevational view of a cantilevered multifloor storage structure according to an embodiment of the invention;
Fig. 2 is a front elevational view of the cantilevered multifloor storage structure; and
Fig. 3 is a perspective view of the cantilevered multifloor storage strutures installed along a street.

### Description of the Preferred Embodiment

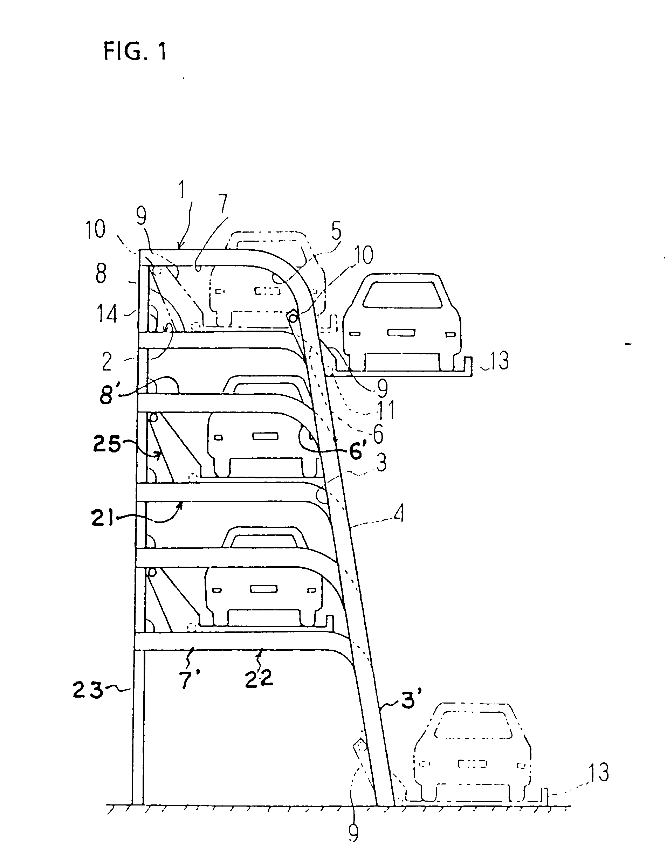

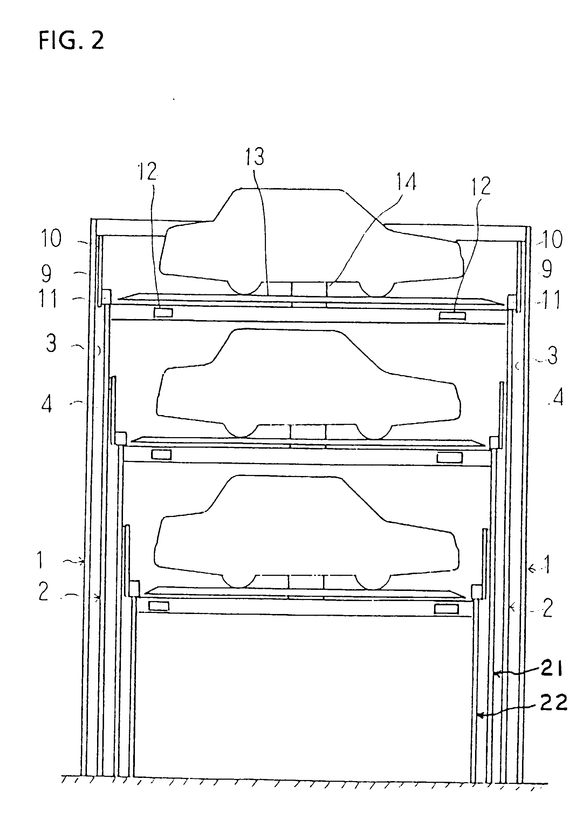

In Figs. 1 and 2, a cantilevered 3-floor storage structure includes a pair of outer rails 1; a pair of first intermediate rails 2; a pair of second intermediate rails 21, and a pair of inner rails 22. The outer and inner rails 1 and 22 have an inverted L-shaped form while the intermediate rails 2 and 21 have an F-shaped form. The L-shaped outer or inner rails have an elevation section 3 or 3', a horizontal pull-in section 7 or 7', and a curved section 5 between them. The F-shaped rails have an elevation section 4, a pair of horizontal pull-in sections 8 and 8', and a pair of curved sections 6 and 6' between the elevation and pull-in sections. These rails are erected on the ground and supported by rear columns 23 such that the elevation sections of the rails are tilted backwardly defining an obtuse enclosed angle as described below in more detail. The distance between the inner rails 22 is set sufficiently large to store a vehicle.

Three identical carriers 25 are mounted on the guiding rails 1, 2, 21, and 22. Each carrier 25 consists of a pair of carrier frames 9 joined together by the rear edge of a substantially rectangular carrier platform 13. Each carrier frame 9 has an outer roller 10 which runs along the outer rail 1 and an inner roller 11 which runs along the inner rail 2. The carrier 25 is elevated and then pulled into the horizontal storage position along the outer and intermediate rails 1 and 21 by a driving unit 14, such as a winch and rope mechanism via guide rollers 12. That is, as the driving unit 14 pulls the carrier 25, the outer roller .10 runs on the inner surface of the elevation section 3 and the lower surface of the pull-in section 7 of the outer rail 1 while the inner roller 11 runs on the outer surface of the elevation section 4 and the upper surface of the upper pull-in section 8 of the intermediate rail 21.

In accordance with the invention, the elevation sections 3, and 4, 3' of the rails 1, 2, 21, and 22 are tilted backwardly by a predetermined angle from the normal line with respect to the ground so as to offset the lever effect of the cantilevered carrier which projects forwardly and tends to bring down the storage structure forwardly. The calculation and experiment showed that the preferred tilt angle was about 10 degrees from the normal line with respect to the ground. By tilting the elevation sections of guiding rails it is possible to eliminate the need for two storage structures connected at the top edges and a large base structure embedded deep in the ground, thereby making not only the storage system stable but the working period shorter and the manufacturing costs lower than before.

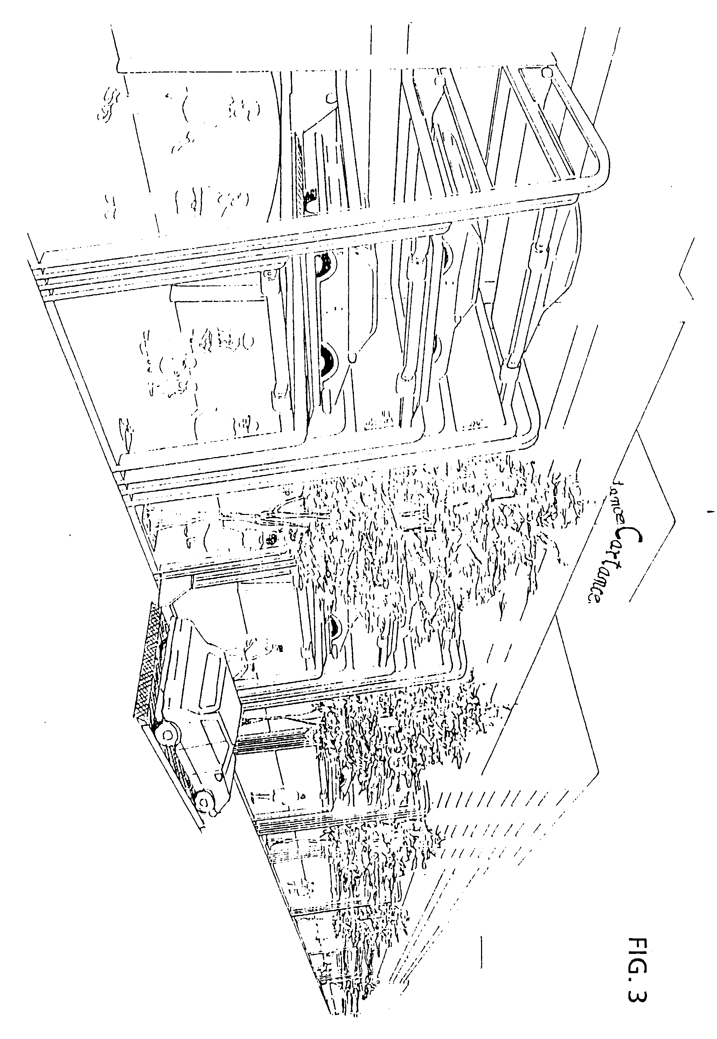

In Fig. 3, a number of cantilevered multifloor storage structures according to the invention are installed over a sidewalk so that people can walk under the storage structures. In this way, the cantilevered multifloor storage structures according to the invention are suitable for installation in limited spaces.

## Claims

1. A cantilevered multifloor storage structure for lifting and storing loads into several floors which are arranged one above another, comprising:
a pair of outer inverted L-shaped rails (1) each having an elevation section (3) for lifting and storing loads into several floors which are arranged one above another and a substantially horizontal pull-in' section (7), and a curved section (5) between said elevation section and said pull-in section;
a pair of inverted L-shaped inner rails (22) each having an elevation section (3') which is shorter than that of said outer rails, a substantially horizontal pull-in section (7') and a curved section (5) which is substantially equal to that of said outer rail;
at least one pair of F-shaped intermediate rails (2; 21) placed between said outer and inner rails and having an elevation section (4), upper and lower pull-in sections (8, 8') which are substantially horizontal, and curved sections between said upper and lower pull-in sections and said elevation section, respectively;
a first cantilevered carriers (25) having a pair of first carrier frames (9) and a first platform (13) connecting said carrier frames and extending forwardly from said first carrier frames;
said first carrier frames having first rollers (10) running on said elevation section and said pull-in section of said outer rails and second rollers (11) running on said elevation section and of said upper pull-in section of said intermediate rail;
a second cantilevered carrier having a pair of second carrier frames and a second platform connecting said second carrier frames and extending forwardly from said second carrier frames;
said second carrier frames having a first roller running on said elevation section and said lower pull-in section of said intermediate rail and an inner roller running on said elevation section and said pull-in section of said inner rail; and
means (14) for driving separtely said first and second cantilevered carriers along said rails;
**characterized** in that
said elevation sections (3, 3', 4, 4') are backwardly tilted defining an obtuse enclosed angle, so that said pull-in section (7') of said inner rails (22) is longer than that of said intermediate rails (2; 21) and that of said outer rails (1), and said first rollers (10) of said first carrier frames (9) are formed as outer rollers running on an inner surface of said elevation section (3) and a lower surface of said pull-in section (7) of said outer rails (1), and said second rollers (11) of said first carrier frames running on an outer surface of said elevation section and an upper surface of said upper pull-in section of said intermediate rail (2, 21).

2. Cantilevered multifloor storage structure according to claim 1, characterized in that the tilt angle is about 10 degrees from the normal line.

## Patentansprüche

1. Freitragendes mehrstöckiges Lagersystem zum Heben und Speichern von Lasten in mehreren Stockwerken, die übereinander angeordnet sind, bestehend aus:
- einem Paar äußerer invertierter L-förmiger Schienen (1), die beide eine Hebesektion (3) zum Heben und Speichern von Lasten in mehreren übereinander angeordneten Stockwerken und eine im wesentlichen horizontale Einschubsektion (7) und eine gekrümmte Sektion (5) zwischen der Hebesektion und der Einschubsektion aufweisen,
- einem Paar innerer invertierter L-förmiger Schienen (22), die beide eine Hebesektion (3') aufweisen, die kürzer ist als die der äußeren Schienen und die eine im wesentlichen horizontale Einschubsektion (7') und eine gekrümmte Sektion (5) aufweisen, die im wesentlichen den der äußeren Schienen entsprechen;
- wenigstens einem Paar F-förmiger Zwischenschienen (2; 21), die zwischen den äußeren und inneren Schienen angeordnet sind, und die eine Hebesektion (4), im wesentlichen horizontale obere und untere Einschubsektionen (8, 8') und gekrümmte Sektionen aufweisen, die jeweils zwischen den oberen und unteren Einschubsektionen und der Hebesektion angeordnet sind;
- ersten freitragenden Trägern (25), die ein Paar erster Trägerrahmen (9) aufweisen, wobei eine erste Plattform (13) die Trägerrahmen verbindet und sich von den ersten Trägerrahmen nach vorn erstreckt; und wobei die ersten Trägerrahmen erste Rollen (10) aufweisen, die auf der Hebesektion und der Einschubsektion der äußeren Schienen laufen, und zweite Rollen (11) aufweisen, die auf der Hebesektion und der oberen Einschubsektion der Zwischenschienen laufen;
- zweiten freitragenden Trägern, die ein Paar zweiter Trägerrahmen aufweisen, wobei eine zweite Plattform die zweiten Trägerrahmen verbindet, und sich von den zweiten Trägerrahmen nach vorne erstreckt; und wobei die zweiten Trägerrahmen erste Rollen aufweisen, die auf der Hebesektion und der unteren Einschubsektion der Zwischenschiene laufen und innere Rollen aufweisen, die auf der Hebesektion und der Einschubsektion der inneren Schiene laufen; und
- Mittel (14) um die ersten und zweiten freitragenden Träger separat entlang der Schienen zu steuern;
**dadurch gekennzeichnet**, daß
die Hebesektionen (3,3',3,4') rückseitig geneigt sind und einen stumpfen geschlossenen Winkel definieren, so daß die Einschubsektion (7') der inneren Schienen (22) länger ist, als die der Zwischenschienen (2; 21) und die der äußeren Schienen (1), und die ersten Rollen (10) der ersten Trägerrahmen (9) als äußere Rollen ausgebildet sind, die auf einer inneren Oberfläche der Hebesektion (3) und einer unteren Oberfläche der Einschubsektion (7) der äußeren Schienen (1) laufen, und die zweiten Rollen (11) der ersten Trägerrahmen auf einer äußeren Oberfläche der Hebesektion und einer oberen Oberfläche der oberen Einschubsektion der Zwischenschienen (2, 21) laufen.

2. Freitragendes mehrstöckiges Lagersystem nach Anspruch 1, dadurch gekennzeichnet, daß der Neigungswinkel um ungefähr 10° von der Normalen abweicht.

## Revendications

1. Structure de stockage à porte-à-faux en plusieurs étages pour soulever et stocker des charges sur plusieurs étages qui sont agencés l'un au-dessus de l'autre, comprenant :
une paire de rails (1) extérieurs en forme de L inversé ayant chacun une section d'élévation (3) destinée à soulever et à stocker des charges sur plusieurs étages qui sont agencés l'un au-dessus de l'autre et une section d'entraînement (7) sensiblement horizontale, et une section courbe (5) entre ladite section d'élévation et ladite section d'entraînement ;
une paire de rails intérieurs (22) en forme de L inversé ayant chacun une section d'élévation (3') qui est plus courte que celle desdits rails extérieurs, une section d'entraînement (7') sensiblement horizontale et une section courbe (5) qui est sensiblement égale à celle dudit rail extérieur ;
au moins une paire de rails intermédiaires (2; 21) en forme de F placés entre lesdits rails extérieurs et intérieurs et ayant une section d'élévation (4), des sections d'entraînement (8; 8') supérieure et inférieure qui sont sensiblement horizontales, et des sections courbes entre lesdites sections d'entraînement supérieure et inférieure et ladite section d'élévation, respectivement ;
des premiers supports à porte-à-faux (25) ayant une paire de premiers châssis porteurs (9) et une première plate-forme (13) reliant lesdits châssis porteurs et s'étendant vers l'avant depuis lesdits premiers châssis porteurs ;
lesdits premiers châssis porteurs ayant des premiers galets (10) se déplaçant sur ladite section d'élévation et ladite section d'entraînement desdits rails extérieurs et des seconds galets (11) se déplaçant sur ladite section d'élévation et de ladite section d'entraînement supérieure dudit rail intermédiaire ;
un second support à porte-à-faux ayant une paire de seconds châssis porteurs et une seconde plate-forme reliant lesdits châssis porteurs et s'étendant vers l'avant depuis lesdits seconds châssis porteurs ;
lesdits seconds châssis porteurs ayant un premier galet se déplaçant sur ladite section d'élévation et ladite section d'entraînement inférieure dudit rail intermédiaire et un galet intérieur se déplaçant sur ladite section d'élévation et ladite section d'entraînement dudit rail intérieur ; et
des moyens (14) pour entraîner séparément lesdits premier et second supports à porte-à-faux le long desdits rails ;
caractérisée en ce que lesdites sections d'élévation (3, 3', 4, 4') sont inclinées vers l'arrière en définissant un angle fermé obtus, de telle sorte que ladite section d'entraînement (7') desdits rails intérieurs (22) est plus longue que celle desdits rails intermédiaires (2; 21) et celle desdits rails extérieurs (1), et lesdits premiers galets (10) desdits premiers châssis porteurs (9) sont formés comme des galets extérieurs se déplaçant sur la surface intérieure de ladite section d'élévation (3) et une surface inférieure de ladite section d'entraînement (7) desdits rails extérieurs (1), et lesdits seconds galets (11) desdits premiers châssis porteurs se déplaçant sur la surface extérieure de ladite section d'élévation et une surface supérieure de ladite section d'entraînement supérieure dudit rail intermédiaire (2, 21).

2. Structure de stockage à porte-à-faux en plusieurs étages selon la revendication 1, caractérisée en ce que l'angle d'inclinaison est d'environ 10 degrés à partir de la ligne normale.
